# EUROPEAN PATENT APPLICATION

(11) **EP 1 231 109 A1**
(43) Date of publication of application: **14.08.2002**
(21) Application number: 02250663.8
(22) Date of filing: 31.01.2002
(51) Int. Cl.: B60Q 1/26, B64D 47/06

(54) **High intensity flashing light**

(30) Priority: 01.02.2001 GB 0102495
(71) Applicant: Oxley Developments Company Limited, Ulverston Cumbria LA12 9QG (GB)
(72) Inventor: Bushell, Timothy George, Cumbria, LA17 7TR (GB); Worgan, Michael Christopher, Ulverston, LA12 7HE (GB)
(74) Representative: W.P. Thompson & Co.

(57) **Abstract**

A high intensity light comprising a plurality of light panels (22) which face in different directions and each of which includes a respective two-dimensional array of LEDs, disposed such that the LEDs on each lighting panel act together as a single light source when viewed from a distance.

## Description

This invention is concerned generally with high intensity flashing lights, for use for example (but not exclusively) as external anti-collision warning lights on aircraft.

High intensity flashing lights for use as anti-collision lights on aircraft and helicopters, are required to be visible at distances of several miles. They are also required to flash and to be red in colour so as to be distinguished from other lights visible in the night sky. Exact requirements in terms of brightness, flash rate and colour are laid down in FAR 29.

One known solution for producing a light that appears to flash is familiar from police and other emergency vehicles. This comprises a bright light bulb about which a mirror rotates, the reflective side of the mirror facing the bulb. The effect of the mirror is to cause the light to be emitted in the form of a beam in the direction in which the mirror is facing, the direction varying as the mirror rotates around the bulb. An observer watching the lamp from a distance will see generally darkness interspersed with flashes of bright light. A disadvantage of this design is the need for the mirror to be in constant rotation. If the mirror should seize up then the flashing effect will be lost. This is of particular relevance at high altitudes where low temperatures can freeze mechanisms. Mechanical assemblies of this type are inherently less reliable than electronic assemblies.

A type of flashing light regularly used on aircraft is a flash tube, similar to a heavy duty version of the flash tubes used for flash photography. To produce a flashing rather than steady light, a high voltage pulse is used rather than a steady low voltage. This type of light does not have any moving parts but the large switched voltage required to operate it means there is a relatively large probability of EMC (Electromagnetic Compatibility) problems. EMC problems result from the phenomenon where operation of an electronic device is corrupted or disabled by that device being exposed to electromagnetic radiation produced by another electronic device in the course of its operation. A power cable carrying a large varying voltage between a power pack and a flash tube is likely to radiate significant quantities of electromagnetic radiation. Hence power cables for flash tubes must be heavily screened. A second problem, particularly on smaller aircraft, is that the power required to produce such a high voltage can instantaneously take up a significant fraction of an aircraft's available power which may compromise the operation of some systems if many onboard systems are required to operate at once.

An additional problem associated with both of the above discussed known lights is the amount of radiation they emit in the range of the spectrum in which NVG (Night Vision Goggles) of the form used by pilots are sensitive. Against a dark night sky, pilots may be dazzled by navigation lights, compromising their ability to fly their aircraft.

One aim of the present invention is to make possible a flashing light capable of being used, for example as an anti-collision light for aircraft which meets all the legal requirements but draws power at a steady state during operation.

An alternative or additional aim is to make possible an anti-collision light for an aircraft which reduces EMC problems on board an aircraft and also does not adversely affect NVG worn by pilots.

In accordance with the present invention, there is provided a high intensity flashing light comprising a plurality of lighting panels or elements which face in different directions and which can be energised in a predetermined sequence whereby to provide the effect of a flashing light source when viewed from a distance.

Preferably, each of the lighting panels or elements comprises an array of LEDs.

Preferably, each of the lighting panels or elements lies on or has a flat outer surface to determine its emission direction.

Advantageously, each array of LEDs is disposed behind a protective plastics cover.

Preferably, the LEDs on the lighting panels are closely packed in two-dimensional rectangular arrays of columns and rows of LEDs such as to act together as a single light source when viewed from a distance.

In one embodiment a respective array of LEDs is formed in/mounted on each of the side facets of a body of regular polygonal cross-section. An interior space within the polygonal body can be provided to house the necessary electronics for controlling the sequential energisation of the LEDs in the plurality of arrays.

An appearance of flashing is maintained by only allowing LEDs on selected facets to be lit at any one time. If the facets which are lit change frequently and in such a way that after a given number of changes the original facets are lit once again, an observer at a distance will see a regular pattern of bright light flashes.

Means can also be provided within the lamp for the storing of preferred flash patterns.

LEDs generate light more efficiently than conventional bulbs so advantage is gained as less power is needed to generate the same effective brightness. As a result there is less drain on the aircraft's power supply hence a smaller power unit can be used.

Preferably, all the facets that are lit in any one flash are adjacent to one another. This increases the effective brightness of a flash in a particular direction.

Preferably the number of facets with lit LEDs remains constant from flash to flash. This allows the device to operate at a substantially steady current. This in combination with the fact that the steady current is lower than in convention lights reduces the chances of interference being radiated and results in a reduced likelihood of EMC problems being caused. The power cables for the lights therefore require significantly less screening or no screening at all. This reduces costs and provides weight saving.

Since there are no moving parts in the system, the inherent reliability is improved compared to the known devices using rotating reflectors.

Because a flashing light in accordance with the present invention can be electronically programmable and the LEDs in the array can be selectively energised, flash sequences which are different in terms of brightness and repetition frequency can easily be obtained to suit the application. Some embodiments may have the facility only to switch all of the LEDs in the light together. In other embodiments it can be arranged for control also to be available of individual LEDs or groups of LEDs within the panels.

The colour emitted by the LEDs can be selected to suit the application. For aviation use, the LEDs can, for example, be "aviation red". A typical flash rate for aviation use may be approximately 50 per minute, the minimum rate requirement being 40 per minute. The ability to enable the colour and other spectral characteristics of the emitted light to be selected enables these to be chosen such as to minimise interference with night vision goggles (NVG) or to emit IR energy to which only the NVG are sensitive.

As a result of the use of electronically energisable light sources, the possibility is made available for the use of the flashing lamp as a means of communicating information between the aircraft and another aircraft or a ground based receiver in addition to its basic warning function.

All switching of the light sources is preferably achieved by means of solid state switching devices in the regulator/controller. Thus, there are no mechanical devices to wear out. Furthermore, the device will operate over a very wide range of temperatures eg. - 40°C to + 70°C without difficulty.

The invention is now described further, by way of example only, with reference to the accompanying drawings, in which:-
Fig. 1 illustrates the principle of operation of a flashing light in accordance with the present invention;
Fig. 2 is a plan view of one preferred embodiment of a flashing light in accordance with the invention;
Fig. 3 is a side view of the embodiment of Fig. 2; and
Fig. 4 shows diagrammatically the array of LEDs in one facet of the flashing light of Figs. 2 and 3.

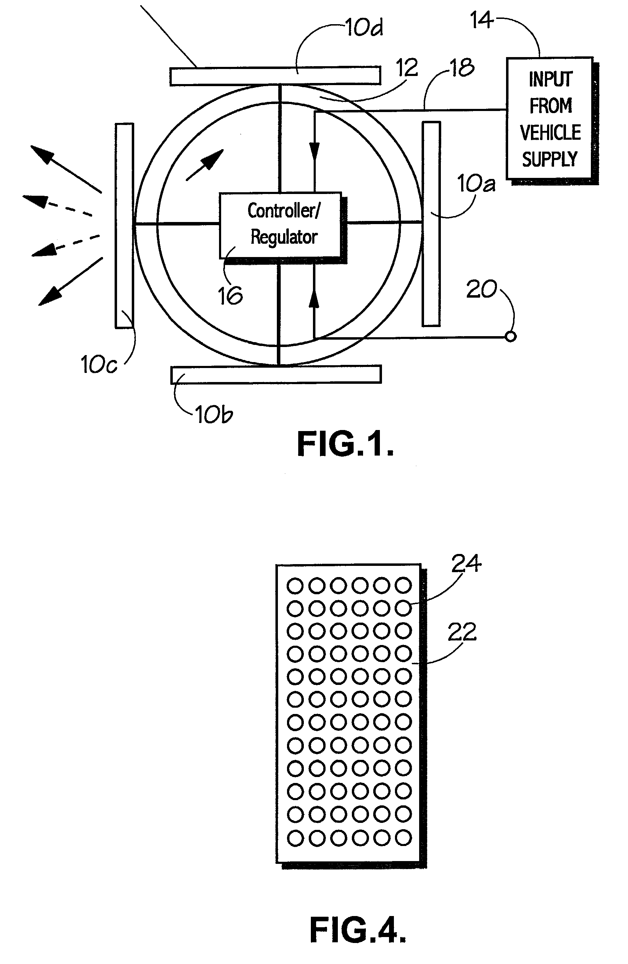

Referring first to Fig. 1, there is illustrated diagrammatically a flashing light unit comprising a number, four in this case, of lighting elements or panels 10a, 10b, 10c, 10d disposed around a cylindrical support 12 so as to face in different directions, which are 90° apart in the particular arrangement illustrated. Each lighting element or panel 10a-10d carries one or more lighting devices (not shown in Fig. 1 but arranged for example as shown in Fig. 4) which radiate outwardly from the panel when energised, as indicated by the arrows extending away from the panel 10c. Where the flashing light is to be associated with a vehicle, a power input from the vehicle supply is established at 14 and passed to a controller/regulator 16 which can be disposed within or adjacent to the support 12. The regulator 16 regulates the supply power and provides the lighting panels/elements 10a-10d with their required power supply.

The unit is flashed by switching the regulator/controller output to each lighting panel/element 10a-10d in turn. The brightness and flash pattern of the light can be altered by sending a coded signal to the regulator/controller 16 via either the power supply wire 18 or via a separate signal input 20.

It is preferred for the lighting devices to be LEDs and for there to be an array of such LEDs in each panel/element 10a-10d.

It is preferred for the light unit to be protected by a glass or plastics cover.

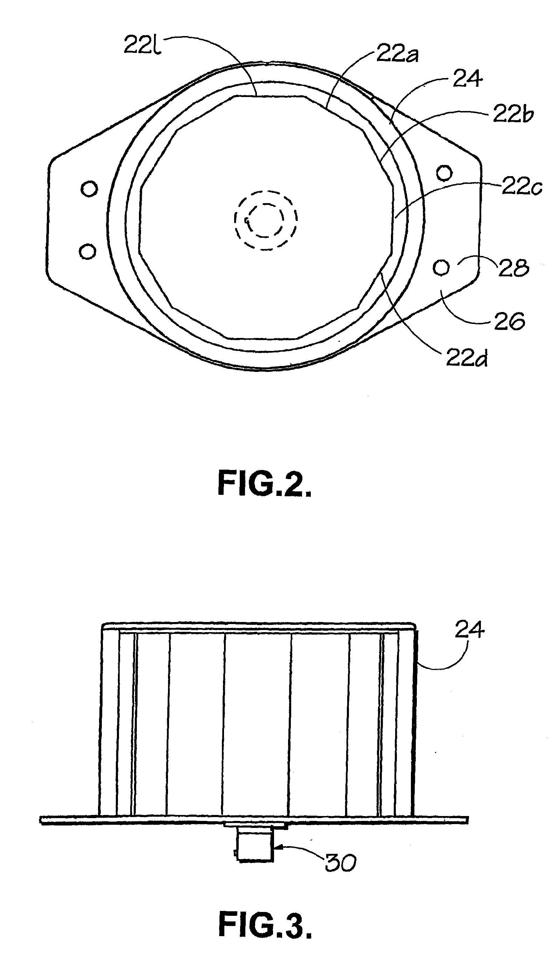

Figs. 2, 3 and 4 illustrate an embodiment of the flashing light having a polygonal cross-section in plan, where each of the twelve facets 22a - 22ℓ of the polygon forms a respective one of the lighting panels/elements 10. Thus, this embodiment comprises twelve rectangular facets/faces 22, each of which carries an array of LEDs 24. As shown diagrammatically in Fig. 4, the array can for example be a regular rectangular LED array having in this case six vertical columns of twelve LEDs 24. However, the particular number and array pattern of LEDs will be selected in practice to suit the application and the operational characteristics required. As in the arrangement of Fig. 1, the LEDs in each facet have their power supply controlled by a controller/regulator so that they can be turned on and off individually in a chosen sequence, eg. sequentially one at a time around the periphery of the unit.

In some cases, however, it can be advantageous for the energisation of adjacent facets/panels to overlap in sequence. Thus, for example, at any instant the LEDs of two adjacent facets would be energised, eg. 22a and 22b. Then, the LEDs in facet 22a would be de-energised and the LEDs in facet 22c would be energised, keeping the LEDs in facet 22b energised also. Then the LEDs in facet 22b would be de-energised and the LEDs in facet 22d would be energised, keeping the LEDs in facet 22c energised also.... and so on around the whole perimeter on a continuous basis. When viewed from most distant positions a viewer at that position would see from the light unit a single flash from the facet facing him/her, but nothing in the "dark period" when the facets facing other positions were being energised. If the viewer happened to be facing a junction between two facets and therefore viewing these two facets equally then a different flash pattern would be seen but nevertheless there would still be a "dark" period when the other facets facing away from the viewer's position were being energised.

The particular embodiment illustrated in Figs. 2 to 4 is designed for use as an aircraft exterior anti-collision warning light. To protect the LEDs and other components from exposure to a harsh external airstream, a transparent plastics shield 24 cover the LED arrays and supporting structure.

The light is secured to the aircraft by screws or other suitable fixings extending through holes 26 in a base plate 28. Power is supplied to the light from an on-board power source in the aircraft via a connector 30.

## Claims

1. A high intensity flashing light comprising a plurality of lighting panels or elements (10; 22) which face in different directions and which are arranged to be energised in a predetermined sequence whereby to provide the effect of a flashing light source when viewed from a distance.

2. A high intensity flashing light according to claim 1, wherein each of the lighting panels or elements (10; 22) comprises an array of LEDs (24).

3. A high intensity flashing light according to claim 2, wherein each of the lighting panels or elements (10; 22) lies on or defines a flat surface to determine its emission direction.

4. A high intensity flashing light according to claim 2 or 3, wherein each array of LEDs (24) is disposed behind a protective plastics cover.

5. A high intensity flashing light according to claim 2, 3 or 4, wherein the LEDs (24) on the lighting panels (10; 22) are packed in two-dimensional rectangular arrays of columns and rows of LEDs such as to act together as a single light source when viewed from a distance.

6. A high intensity flashing light according to any of claims 2 to 5, wherein a respective array of LEDs (24) is formed in/mounted on each of the side facets (22a-22ℓ) of a body of regular polygonal cross-section.

7. A high intensity flashing light according to claim 6, wherein an interior space is defined within the polygonal body to house the necessary electronics for controlling the sequential energisation of the LEDs in the plurality of arrays.

8. A high intensity flashing light according to claim 6 or 7, having means by which only LEDs on selected facets are allowed to be lit at any one time whereby when the facets which are lit change frequently and in such a way that after a given number of changes the original facets are lit once again, an observer at a distance will see a regular pattern of bright light flashes.

9. A high intensity flashing light according to any of claims 6 to 8, including means within the lamp for the storing of preferred flash patterns.

10. A high intensity flashing light according to any of claims 6 to 9 wherein all of the facets that are lit in any one flash are arranged to be adjacent to one another.

11. A high intensity flashing light according to any of claims 6 to 10, wherein the number of facets with lit LEDs is arranged to remain constant from flash to flash.
